# NEW EUROPEAN PATENT SPECIFICATION

(11) **EP 0 123 377 B2**
(45) Date of publication and mention of the opposition decision: **12.07.1995**
(45) Mention of the grant of the patent: 06.09.1989
(21) Application number: 84300747.7
(22) Date of filing: 07.02.1984
(51) Int. Cl.: C08G 69/28, C08G 73/14, C08G 63/78

(54) **Polycondensation process**
Polykondensationsverfahren
Procédé de polycondensation

(30) Priority: 16.02.1983 US 466904
(43) Date of publication of application: 31.10.1984
(73) Proprietor: AMOCO CORPORATION, Chicago Illinois 60601 (US)
(72) Inventor: Richardson, Joel Albert, Naperville Illinois 60565 (US); Poppe, Wassily, Lombard Illinois 60148 (US); Bolton, Benjamin Arthur, Wheaton Illinois 60187 (US); Paschke, Edward Ernest, Wheaton Illinois 60187 (US)
(74) Representative: Ritter, Stephen David

(56) References cited:
- FR-A- 2 360 622
- FR-A- 2 497 516
- JP-A- 604 993
- US-A- 2 361 717
- US-A- 3 110 547
- CHEMICAL ABSTRACTS, vol. 94, no. 16, April 20, 1981, page 3, abstract 122004r, Columbus, Ohio, US; L.B. SOKOLOV et al.: "Thin-layer interphase polycondensation with monomeric aerosols", & VYSOKOMOL. SOEDIN., SER. A 1980, 22(12), 2741-6
- CHEMICAL ABSTRACTS, vol. 62, no. 13, 1965, column 16474g, Columbus, Ohio, US; & SU - A - 151 812
- CHEMISCHES ZENTRALBLATT, 134 Jahrgang, 1963, p 231
- CHEMISCHES TECHNISCHES LEXIKON, Springer Verlag 1979, p. 326

## Description

The field of this invention relates to a polycondensation process for the manufacture of organic polymers from prepolymers or salts using a high temperature system wherein the polymerization is conducted in a steam or vapor stream at melt temperatures in the range of about 350°F to about 750°F (177―399°C) while the wall temperature of the aerosol jet tube reactor is about 400°F to about 1000°F (204―538°C) and the total residence time is kept in the range of about 0.1 seconds to about 20 seconds. Our process is suitable for the manufacture of polyesters, polycarbonates, polyarylates, polyesterarylates, polyamides, polyamide-imides and polyimides. Our novel aerojet regime process is applicable to any polycondensation reactor provided the salt or prepolymer is homogeneous and is in a single phase, the salt or prepolymer is stable under the high reaction temperatures and is capable of forming droplets. This means that the salt or prepolymers useful in our novel process atomize easily at the inlet of the jet reactor and thus have a high surface to volume ratio in the reactor.

Our novel aerosol jet process for the manufacture of polyamides, polyamide-imides, polyimides, polyesters, polycarbonates, polyarylates and polyesterarylates is unknown to the prior art, however, we will discuss the most relevant prior art references relating to polyamides.

U.S. Patent 2,361,717 discloses a slug flow tubular reactor, reaction pressures were about 1000 psig (6.89 mPa) in the preheat sections and residence times were 15 to 30 minutes. This is clearly a much slower process than our novel aerosol jet process where the residence times are about 0.1 to about 20 seconds. Another reference of interest may be Canadian Patent 527,473 which discloses the use of variable tube diameters to control pressure drop and temperatures. U.S. Patent 3,960,820 discloses a slug flow regime using steam injection to control residence time by pressure control. Other references of interest include U.S. Patent 2,689,839 and U.S. Patent 3,357,955 which relate to additive additions or product quality adjustment of polyamides; and U.S. Patent 3,300,449 which discloses a residence time of about 10 to about 120 minutes. U.S. Patents 3,193,535 and 3,258,313 disclose a process with a tubular reactor which uses a high water content 47% by weight. In reviewing all these references it is clear that our novel aerosol jet polycondensation process has not been contemplated by the prior art.

The general object of this invention is to provide a novel polycondensation process wherein the polycondensation is carried out in an aerosol jet regime at melt temperatures of about 500°F (260°C) to about 750°F (399°C) and contact times of about 0.1 seconds to about 20 seconds. A more particular object is to provide a novel condensation process for condensing aromatic carboxylic acids and anhydrides with diamines which are difficult to conduct under methods known to the prior art. Further, objects will be apparent from the description of the invention hereunder.

In our novel process we prepare a salt by reacting an aliphatic or aromatic diamine with di, tri or tetracarboxylic acids or their corresponding anhydrides or mixtures of the various acids or anhydrides. For polyesters, polycarbonates, polyarylates and polyesterarylates we prepare the appropriate prepolymers.

More specifically the present invention provides a polycondensation process for the manufacture of polyamides, polyamideimides, polyesters and polyarylates which process comprises forming a heated solution of a salt or of a prepolymer or of a salt and prepolymer mixture which solution is substantially homogeneous, is in a single phase, is stable at the selected polycondensation temperature and atomizes readily, feeding said solution to a control means to give an aerosol mist in a flash reactor at a pressure of about 0―400 psig (0―2.76 MPa) to effect condensation and polymerisation, the flash reactor being designed to provide a high heat flux with wall temperatures of about 400°F to about 1000°F (204―538°C) and melt temperatures of about 350°F to about 750°F (177―399°C) and keeping the resulting polymer in the reactor for about 0.1 seconds to about 20 seconds. Pressure measurements recorded in MegaPascals (MPa) are understood to be gauge measurements throughout the specification and claims.

Suitably, in our process for the manufacture of polyamides, polyamide-imides or polyimides, a salt is first produced. This is carried out in any suitably designed stirred reactor. Feed materials are charged into the reactor at a temperature of about 75°F to about 175°F (24―79°C). Solvent content of the salt solution is maintained at less than 25% by weight, preferably about 13 to about 17% by weight. Temperatures are then raised to provide a homogeneous salt solution. This is usually the range of about 375°F to about 450°F (191―232°C). As quickly as possible, pressures are allowed to build to the limits of the equipment, usually to about 300 to about 600 psig (2.07―4.14 mPa). The salt prepared as described above, is metered through a pump and pressure is increased to about 1500 to about 3000 psig (10.34―20.68 mPa). If additional processing is required to purify or filter the salt solution, the operation is carried out prior to the pump. These salt solutions may then be passed through a preheat zone when the temperature is increased to about 625°F (329°C), the total residence time in these preheat zone being kept at about 25 to about 50 seconds. The resulting salt and prepolymer mix is then heated and flashed through a control valve or nozzle to give an aerosol mist at pressures of about 0 to about 400 psig (0―2.76 mPa). The salt and prepolymer mix then is passed through the flash reactor. This reactor is designed to provide a high heat flux to the polymer and has a wall temperature of about 600°F to about 1000°F (316―538°C). The melt temperature range is about 350°F to about 750°F (177―399°C) through the flash reactor, preferably about 500°F to 750°F (260―399°C). The total residence time of the reactants in the flash reactor is about 0.1 to about 20 seconds, preferably about 0.2 to about 10 seconds and varies with the feed rate and pressure which are suitably in the range of about 100 lb/hour inch² to about 200 lb/hour inch² (2.88―5.76 kg/hr-m²).

In our process specific mass flow refers to mass flow per unit of reactor cross sectional area. The lower limit is defined by the limits of proper flow velocity through the reactor for the aerosol jet regime as opposed to slug flow. The upper limit is defined by the limits of heat input. When utilizing our process to prepare polyesters from dicarboxylic acids and glycol, polycarbonates from diphenols and phosgene, polyarylates from diphenols and dicarboxylic acids and polyesterarylates from diphenols, dicarboxylic acids and phosgenes we prepare a prepolymer which can suitably be an oligomer, dimer or trimer but must be homogeneous and is in a single phase, is stable under the high reaction temperatures and is capable of atomizing readily at the inlet of the jet reactor. The temperatures and other reaction conditions are the same as set forth hereinabove. Suitable polyesters which are prepared by our process and disclosed by Kirk-Othmer Encyclopedia of Chemical Technology, John Wiley and Sons (1982), pages 531―576, including the references cited therein. Suitable polycarbonates which are prepared by our process are disclosed in the aforementioned Kirk-Othmer Encyclopedia of Chemical Technology, Vol. 18, pages 479 through 494 including the references cited therein and in Chapter 2 of the book, New Linear Polymers by Lee et al, McGraw Hill Book Co. (1967) including the references cited therein. Suitable polyarylates prepared by our process are disclosed in U.S. Patents 3,772,389 and 4,302,382 and the references cited therein.

Suitably, from the flash reactor the polymer is injected directly on to the screws of a twin screw extruder. Residence time in the twin screw extruder is about 45 seconds to about 7 minutes preferably 45 seconds to 3 minutes. Other types of finishing reactors are also suitably employed such as disc ring reactors, agitated stranding devolatizers and thin film evaporators.

The advantages of our novel aerosol jet reactor process are that the flow regime in the flash reactor is an aerosol jet and that after salt preparation, the total residence time in the preheat-zone and flash reactor is about 76 to about 240 seconds while in the prior art process the residence time is in the range of about 75 to 240 minutes. The maximum melt temperature in our novel process is about 620°F to about 730°F (327―388°C) while in the prior art processes the range is below 570°F (299°C), usually around 390°F to 450°F (199―232°C). Furthermore, in our process the flow is self-controlling while the prior art processes require special controls. A further advantage of our novel aerosol jet process is that we are able to process high melt viscosity polymers while conventional processes are not able to process high melt viscosity polymers with any confidence.

Suitable di, tri and tetracarboxylic acids useful in our process to manufacture polyamides include terephthalic acid, isophthalic acid, trimellitic acid, 5 - tertiary - butylisophthalic acid, adipic acid, azelaic acid, sebacic acid, dodecanedioic acid, brassylic acid and etc. The preferred acids are terephthalic acid, isophthalic acid and adipic acid and mixtures of these.

Suitable anhydrides useful in our process include trimellitic anhydride, pyromellitic dianhydrides 2, 3, 6, 7-naphthalene tetracarboxylic dianhydride, 3,3',4,4' - diphenyl tetracarboxylic dianhydride, 1,2,5,6 - naphthalene tetracarboxylic dianhydride, 1,2,3,4 - cyclopentane tetracarboxylic dianhydride 2,2',3,3' - diphenyl tetracarboxylic dianhyride, 2,2 - bis(3,4 - dicarboxylphenyl) propane dianhydride, 3,4 - dicarboxylphenol sulfone dianhydride, 3,4,9,10-perylene tetracarboxylic dianhydride, 2,3,4,5 - pyrrolidone tetracarboxylic dianhydride, bis(3,4 - dicarboxylphenyl) ether dianhydride; ethylene tetracarboxylic dianhydrides; 3,3',4,4' - benzophenone tetracarboxylic dianhydrides, bis(3,4 - dicarboxylphenyl) sulfide dianhydride, bis(3,4 - dicarboxylphenyl) methane dianhydride, 1,4,5,8 - naphthalene tetracarboxylic dianhydride and etc. The preferred dianhydride is trimellitic anhydride, tricarboxylic acids and their corresponding anhydrides. It should be understood that tricarboxylic acids and their corresponding anhydrides like trimellitic anhydride are useful for the manufacture of polyamide-imides and tetracarboxylic acids and their corresponding anhydrides are useful for the manufacture of polyimides.

Aliphatic, cycloaliphatic and aromatic diamines useful in our process include the following: hexamethylene diamines, trimethylhexamethylene diamine, ethylenediamine, tetramethylene diamine, octamethylene diamine, nonamethylene diamine, decamethylene diamine, dodecamethylene diamine, 4,4'-diamino (dicyclohexylmethane), xylylene diamine. The preferred aliphatic diamines include hexamethylene diamine and trimethylhexamethylene diamines.

Suitable aromatic diamines useful in our process include para- and meta-phenylenediamine, para- and meta - xylenediamine, para-toluenediamine, 2,4 - toluenediamine, 2,6 - toluenediamine, 3,5 - toluenediamine, oxybis(aniline), thiobis(aniline), sulfonylbis(aniline), diaminobenzophenone, methylenebis(aniline), benzidine, 1,5 - diaminonaphthalene, oxybis(2 - methylaniline), thiobis(2 - methylaniline), and the like. Examples of other useful aromatic primary diamines are the following: 2,2' - naphthalene diamine, 2,4' - naphthalene diamine, 2,2' - biphenylene diamine, 3,3' - biphenylene diamine, 4,4'-biphenylene diamine, and the like; 3,3' - dichlorobenzidine, ethylene dianiline (4,4' - diaminodiphenyl ethane), and the like; ketodianiline, 3,3' - diaminodiphenyl sulfide, 4,4' - diaminodiphenyl sulfone, 3,3' - diaminodiphenyl sulfone, 2,2 - bis(4 - aminophenyl) hexafluoropropane, 4,4' - diaminodiphenyl methane, 2,6 - diaminopyridine, bis - (4 - aminophenyl) - diethyl silane, bis(4 - aminophenyl) ethyl phosphine oxide, bis(4 - aminophenyl) - N - phenylamine, bis(4 - amino - phenyl) - N - methylamine, 3,3' - dimethyl - 4,4' - diaminobiphenyl para - bis(2 - methyl - 4 - aminophenyl) - benzene, 3,3' - diaminoadamantane. The preferred aromatic diamine is meta-phenylene diamine.

The preferred process comprises preparing a salt of an aliphatic or aromatic diamine or a mixture of these and di, tri or tetracarboxylic acid, a mixture of these or their corresponding anhydrides by reacting both feedstocks at a temperature of about 375°F to about 450°F (191―232°C) in an aqueous medium provided the water content of the resulting solution is kept below 25% water by weight. The resulting salt solution is subjected to a pressure of about 1500 to about 3000 psig (10.34-20.68 MPa) and is then passed through a preheat zone where the temperature is increased from about 425°F to about 625°F (218-329°C), preferably 550 to 625°F (288-329°C) the total residence time is kept about 25 to about 50 seconds, the reactants then are flashed through a control valve or nozzle to give an aerosol mist at a pressure of about 0 to about 400 psig (0-2.76 MPa). The polymer is then passed through a flash reactor to give the polymer a high heat flux wherein the melt temperature is about 350 to about 750°F (177-399°C), preferably 550-750°F (288-399°C), while keeping the reactor wall temperature at about 600 to about 1000°F (316-538°C). The total residence time in the reactor being about 0.1 to about 20 seconds. The polymer is then injected onto the screws of a twin screw reactor. The residence time in the extruder being about 45 seconds to about 3 minutes.

The preferred polymers manufactued by our process are the polyamides prepared from hexamethylene diamine and terephthalic acid, isophthalic acid and adipic acid in the mole ratio of about 100:65:25:10; to about 100:85:5:10; and the polyamides which are prepared from hexamethylene diamine, terephthalic acid and isophthalic acid in the mole ratio of about 100:30:70 to about 100:90:10; and the polyamides which are prepared from hexamethylene diamine and adipic acid in a mole ratio of about 100:100; and the polyamides which are prepared from m-phenylene diamine trimellitic anhydride and isophthalic acid in a mole ratio of about 100:10:90 to 100:50:50.

These polyamides, polyamide-imides and polyimides prepared by the novel process described herein are used as replacements for metals in engineering applications, and therefore, they are molded and usually filled with reinforcing materials. For other applications fibers and laminates are also prepared from the polymers manufactured using our novel process.

Injection molding of the novel polymers produced by the novel process is accomplished by injecting the polymer into a mold maintained at a temperature of about 250°F to about 500°F (121-260°C). In this process a 0.1-2.0 minute cycle is used with a barrel temperature of about 500°F to about 700°F (260-371°C). The injection molding conditions are given in Table 1.

**TABLE 1**

| | |
|---|---|
| Mold Temperature | 250-580°F (121-304°C) |
| Injection Pressure | 2,000 to 40,000 psi (13.8-27.6 mPa) and held for 0.5-20 seconds |
| Back Pressure | 0-400 psi (0-2.76 mPa) |
| Cycle Time | 6-120 seconds |
| Extruder | |
| Nozzle Temperature | 500°F to 700°F (260-371°C) |
| Barrel Temperature | 500°F to 700°F (260-371°C) |
| Screw | 10-20 revolutions/minute |

We have found that the novel polyamides, polyamideimides and polyimides prepared by our novel process are improved by the addition of reinforcing material, particularly the mechanical properties of the polymers are improved if these polymers contain from about 10 to about 60% by weight glass fibers, glass beads, or graphite or mixtures thereof. The preferred range is about 30 to about 40%. Suitably reinforcing materials are glass fibers, glass beads, glass spheres and glass fabrics. The glass fibers are made of alkali-free boron-silicate glass or alkali containing C-glass. The thickness of the glass fiber is suitably on the average between 3 »m and 30 »m. The length of the glass fiber is not critical and both long and short glass fibers are suitable. Long fibers have an average length of from 5 mm to 55 mm and short fibers have an average filament length from about 0.05 mm to about 5 mm. Any standard commercial-grade fibers, especially glass fiber, may be used to reinforce our polymers. Glass beads ranging from about 5 mm to about 50 mm in diameter may also be used as a reinforcing material.

The reinforced polymers may be prepared in various ways. For example, so-called roving endless glass fiber strands are coated with the polymer and subsequently granulated. The cut fibers or the glass beads may also be mixed with the soluble polymer and heated to form the reinforced polymer. Injection molding of the the reinforced polymer is carried out in the same manner as shown in Table 1.

The following examples illustrate the preferred embodiments of the invention. It will be understood that the examples are for illustrative purposes only and do not purport to be wholly definitive with respect to conditions or scope of the invention.

### General procedure

The salt is prepared as follows: diacid and diamine monomers are charged to a batch reactor with a pitched blade turbine and of suitable temperature and pressure ratings to provide a homogeneous salt solution. This is typically 425°F to 450°F (218-232°C) and 450 to 550 psig (3.10-3.79 MPa). Additional components including water, catalyst, silicone oil end capping reagent, and plasticizer are also introduced in the salt reactor. Water content of the salt is preferably below 25% by weight. The preferred range is about 13 to 17% by weight.

The salt is metered through a pump and pressure is increased to 1500―5000 psig (10.34―34.47 MPa). The resulting prepolymer then passes through a preheat zone where temperature is raised from about 425°F to about 450°F (218―232°C) to about 550°F to about 625°F (288―329°C). The total residence time here is 25 to 50 seconds. The resulting prepolymer is then flashed through a control valve to give an aerosol mist at pressure of 0―400 psig (0―2.76 MPa) and the polymer is then passed through a tubular flash reactor. This reactor is designed to provide a high heat flux to the polymer and has a wall temperature of about 600°F to about 1000°F (316―538°C), melt temperature range is about 350°F to about 750°F (177―399°C) through the flash reactor. The total residence time in the reactor is about 0.1 to about 20 seconds based on feed rate and pressure and this is indicated for each example, Examples 1 through 20. (The inherent viscosity (I.V) is measured in 60/40 phenol/tetrachloroethane at 30°C).

The polymer is injected directly on the screws of the twin screw reactor and the results are given in Examples 1 through 14 under appreciated molecular weight.

Examples 1 through 14 were prepared as described in General Procedure but specific details and results are noted for each Example hereinbelow:

### Example 1

| | |
|---|---|
| Monomers: | 10% hexamethylene diammonium adipate |
| | 65% hexamethylene diammonium terephthalate |
| | 25% hexamethylene diammonium isophthalate |
| Water content: | 15% (by weight) |

Procedure: The diacids, diamines and water were charged to the salt reactor of room temperature. The initial charge totaled 36 lb (50 g/moles). Additional charges were 7.2 lbs (10 g/moles) each and were fed through lock hoppers as the salt reactor was operated in a fed batch mode. The salt reactor was a 5 gallon (18.9 liter) stirred tank reactor with a pitched blade turbine, oil, jacket, variable speed drive and internal coils.

Once the salt reactor had been charged, it was purged with inert gas and heated to 425°F (218°C). The pressure was set to 480 psig (3.31 MPa) by first allowing the water in the salt to reach its equilibrium pressure and then adjusting with inert gas. In the feed batch operations, the salt saw a range of residence times. They averaged about 100 minutes. Also as a result of the fed batch mode of operation, it was necessary to include a second surge vessel in the salt preparation section. This vessel, which was at 425°F (218°C) and 450 psig (3.10 MPa), was used to isolate the salt reactor during charge addition.

Upon leaving the salt section, the salt was passed through a 140 micron filter into a two headed positive displacement pump. Temperature through the pump were maintained at 425°F (218°C). Pressures were increased to 1800 psig (12.41 MPa) in the pump. Following the pump, the salt solution was passed through a preheat zone and heated to 600°F (316°C). The pressure prevented vapor formation in the preheater. Residence time in the preheater was 40 seconds.

The salt entered the flash reactor through a research control valve* where pressure was reduced from 1800 psig to 400 psig (12.41―2.76 MPa). Wall temperature in the flash reactor were kept at 750°F (399°C) using electrical heaters but the melt temperature ranged from 525°F (274°C) to 612°F (322°C) depending on location in the flash reactor. Pressure in the flash reactor was controlled by a second RCV. Residence time in the flash reactor was estimated at 7.6 seconds. The run had a 141 lb/hr-in² (4.06 kg/hr-m²) specific mass feed rate per unit of cross sectional area.
*An air operated control valve sold under the name "Research Control Valve" by the Badger Meter Company.

After leaving the flash reactor, our polymer had an inherent viscosity (Phenol/TCE) of 0.20 to 0.24 dl/g. It was injected directly onto the screws of the extruder. An open screw design was used to facilitate vapor removal. A screw speed of 200 rpm was used to maintain minimum fill on the screws. Temperatures were 620°F (327°C) in the injection zone but they were dropped gradually to 600°F (316°C) at the die head. Following the extruder, the polymer strands was passed through a water bath and then pelletized. The mean product I.V. was 1.20 dl/g with a standard deviation of 0.09 dl/g over the 6-hour run. Total production was 64 lbs (28.8 kg) of polymer.

### Example 2

| | |
|---|---|
| Monomers: | 10% hexamethylene diammonium adipate |
| | 75% hexamethylene diammonium terephthalate |
| | 15% hexamethylene diammonium isophthalate |
| Water content: | 15% (by weight) |
| Specific mass flow: | 149 lb/hr-in² (4.29 kg/hr-m²) |
| Residence time: | Salt reactor―90 minutes |
| | Preheat zone―36 seconds |
| | Reactor zone―1.7 seconds |
| Reactor wall temp: | 700°F (371°C) Pressure: 100 psig (689 kPa) |
| Melt temp: | 584°F to 642°F (307―339°C) |
| Product I.V. (Phenol/TCE) | Tube 0.40 dl/g *ZSK 1.20 dl/g |

| | |
|---|---|
| *Model ZSK 30 co-rotating inter-meshing twin screw extruder manufactured by Werner and Pfleiderer Corp. | |

### Example 3

| | |
|---|---|
| Monomers: | 85% hexamethylene diammonium terephthalate |
| | 15% hexamethylene diammonium isophthalate |
| Water content: | 15% (by weight) |
| Specific mass flow: | 156 lb/hr-in² (4.49 kg/hr-m²) |
| Residence time: | Salt reactor―90 minutes |
| | Preheat zone―36 seconds |
| | Reactor zone―1.7 seconds |
| Reactor wall temp: | 700°F (371°C) Pressure: 100 psig (689 kPa) |
| Melt temp: | 580°F to 660°F (304―349°C) |
| Product I.V. | Tube 0.40 dl/g ZSK 1.0 dl/g |

### Example 4

| | |
|---|---|
| Monomers: | 100% hexamethylene diammonium adipate |
| Water content: | 15% (by weight) |
| Residence time: | Salt reactor―90 minutes |
| | Preheat zone―36 seconds |
| | Reactor zone―1.7 seconds |
| Product I.V. | Tube 0.40 dl/g ZSK 1.2 dl/g |

### Example 5

| | |
|---|---|
| Monomers: | 82% hexamethylene diammonium terephthalate |
| | 14% hexamethylene diammonium isophthalate |
| | 3% trimethyl hexamethylene diammonium terephthalate |
| | 1% trimethyl hexamethylene diammonium isophthalate |
| Water content: | 17% (by weight) |
| Specific mass flow: | 149 lb/hr-in² (4.29 kg/hr-m²) |
| Residence time: | Salt reactor―100 minutes |
| | Preheat zone―40 seconds |
| | Reactor zone―2 seconds (est.) |
| Reactor wall temp: | 760°F (404°C) Pressure: 100 psig (689 kPa) |
| Melt temp: | 570°F to 650°F (299―343°C) |
| Salt feed temp: | 580°F (304°C) |
| Product I.V. (Phenol/TCE) | Tube 0.20 dl/g ZSK 1.00 dl/g |

### Example 6

| | |
|---|---|
| Monomers: | 65% hexamethylene diammonium terephthalate |
| | 15% hexamethylene diammonium isophthalate |
| | 10% hexamethylene diammonium adipate |
| | 10% amic acid adduct (TMA, HMDA)* |
| Water content: | 15% (by weight) |
| Specific mass flow: | 141 lb/hr-in² (4.06 kg/hr-m²) |
| Residence time: | Salt reactor―100 minutes |
| | Preheat zone―40 seconds |
| | Reactor zone―5 seconds (est). |
| Reactor wall temp: | 750°F (399°C) Pressure: 200 psig (1.38 mPa) |
| Melt temp: | 525°F to 640°F (274―338°C) |
| Salt feed temp: | 620°F (327°C) |
| Product I.V. (Phenol/TCE) | Tube 0.20 dl/g ZSK 1.01 dl/g |

| | |
|---|---|
| *TMA=trimellitic anhydride HMDA=hexamethylene diamine | |

### Example 7

| | |
|---|---|
| Monomers: | 8% hexamethylene diammonium adipate |
| | 2% M-phenylene diammonium adipate |
| | 49% hexamethylene diammonium terephthalate |
| | 16% M-phenylene diammonium terephthalate |
| | 11% hexamethylene diammonium isophthalate |
| | 4% M-phenylene diammonium isophthalate |
| | 8% amic acid adduct (TMA, HMDA) |
| | 2% amic acid adduct (TMA, M-phenylene diamine) |
| Water content: | 13% (by weight) |
| Specific mass: | 149 lb/hr-in² (4.29 kg/hr-m²) |
| Residence time: | Salt reactor―100 minutes |
| | Preheat zone―40 seconds |
| | Reactor zone―2 seconds (est.) |
| Reactor wall temp: | 750°F (399°C) Pressure: 100 psig (689 kPa) |
| Melt temp: | 550°F to 640°F (288―338°C) |
| Salt feed temp: | 585°F (307°C) |
| Product I.V. (Phenol/TCE) | Tube 0.21 dl/g |

### Example 8

| | |
|---|---|
| Monomers: | 50% hexamethylene diammonium isophthalate |
| | 50% M-phenylene diammonium isophthalate |
| Water content: | 13% (by weight) |
| Specific mass flow: | 158 lb/hr-in² (4.55 kg/hr-m²) |
| Residence time: | Salt reactor―100 minutes |
| | Preheat zone―40 seconds |
| | Reactor zone―2 seconds (est.) |
| Reactor wall temp: | 750°F (399°C) Pressure: 100 psig (689 kPa) |
| Melt temp: | 590°F to 710°F (310―377°C) |
| Salt feed temp: | 600°F (316°C) |
| Product I.V. (Phenol/TCE) | Tube 0.16 dl/g |

### Example 9

| | |
|---|---|
| Monomers: Water content: Specific mass: | 25% hexamethylene diammonium isophthalate |
| | 25% M-phenylene diammonium isophthalate |
| | 25% amic acid adduct (TMA, HMDA) |
| | 25% amic acid adduct (TMA, M-phenylene diamine) |
| | 13% (by weight) |
| | 158 lb/hr-in² (4.55 kg/hr-m²) |
| Residence time: | Salt reactor―100 minutes |
| | Preheat zone―40 seconds |
| | Reactor zone―2 seconds (est.) |
| Product I.V. (Phenol/TCE) | Tube 0.15 dl/g |

### Example 10

| | |
|---|---|
| Monomers: | 50% M-phenylene diammonium isophthalate |
| | 50% amic acid adduct (TMA, M-phenylene diamine) |
| Water content: | 13% (by weight) |
| Specific mass flow: | 158 lb/hr-in² (4.55 kg/hr-m²) |
| Residence time: | Salt reactor―100 minutes |
| | Preheat zone―40 seconds |
| | Reactor zone―2 seconds (est.) |
| Reactor wall temp: | 785°F (418°C) Pressure: 100 psig (689 kPa) |
| Melt temp: | 600°F to 700°F (316―371°C) |
| Salt feed temp: | 600°F (316°C) |
| Product I.V. (NMP) | Tube 0.14 dl/g Solid state 0.45 dl/g |

### Example 11

| | |
|---|---|
| Monomers: | 100% M-phenylene diammonium isophthalate |
| Water content: | 21% (by weight) |
| Specific mass flow: | 124 lb/hr-in² (3.57 kg/hr-m²) |
| Residence time: | Salt reactor―100 minutes |
| | Preheat zone―40 seconds |
| | Reactor zone―1 second (est.) |
| Reactor wall temp: | 850°F (454°C) Pressure: 50 psig (345 kPa) |
| Melt temp: | 525°F to 800°F (274―427°C) |
| Salt feed temp: | 630°F (332°C) |
| Product I.V. (NMP) | Tube 0.13 dl/g ZSK 0.35 dl/g |

### Example 12

| | |
|---|---|
| Monomers: | 49% hexamethylene diammonium terephthalate |
| | 21% hexamethylene diammonium isophthalate |
| | 21% M-phenylene diammonium terephthalate |
| | 9% M-phenylene diammonium isophthalate |
| Water content: | 13% (by weight) |
| Specific mass flow: | 124 lb/hr-in² (3.57 Kg/hr-m²) |
| Reactor wall temp: | 690°F (366°C) Pressure: 100 psig (689 kPa) |
| Melt temp: | 460°F to 620°F (238―327°C) |
| Salt feed temp: | 600°F (316°C) |
| Product I.V. (Phenol/TCE) | Tube 0.16 dl/g ZSK 1.00 dl/g |

### Example 13

| | |
|---|---|
| Monomers: | 49% hexamethylene diammonium terephthalate |
| | 21% hexamethylene diammonium isophthalate |
| | 21% trimethylhexamethylene diammonium terephthalate |
| | 9% trimethylhexamethylene diammonium terephthalate |
| Water content: | 13% (by weight) |
| Specific mass flow: | 124 lb/hr-in² (3.57 Kg/hr-m²) |
| Residence time: | Salt reactor―100 minutes |
| | Preheat zone―40 seconds |
| | Reactor zone―2 seconds (est.) |
| Reactor wall temp: | 650°F (343°C) Pressure: 100 psig (689 kPa) |
| Melt temp: | 530°F to 640°F (277―338°C) |
| Salt feed temp: | 630°F (332°C) |
| Product I.V. (Phenol/TCE) | Tube 0.24 dl/g ZSK 1.00 dl/g |

### Example 14

| | |
|---|---|
| Monomers: | 40% hexamethylene diammonium terephthalate |
| | 60% hexamethylene diammonium isophthalate |
| Water content: | 17% (by weight) |
| Specific mass flow: | 137 lb/hr-in² (3.95 kg/hr-m²) |
| Residence time: | Salt reactor―100 minutes |
| | Preheat zone―50 seconds |
| | Reactor zone―2 seconds (est.) |
| Reactor wall temp: | 650°F (343°C) Pressure: 100 psig (689 kPa) |
| Melt temp: | 525°F to 630°F (274―332°C) |
| Salt feed temp: | 625°F (329°C) |
| Product I.V. (Phenol/TCE) | ZSK 1.14 dl/g |

## Claims

1. A polycondensation process for the manufacture of polyamides, polyamide-imides, polyesters and polyarylates which process comprises forming a heated solution of a salt or of a prepolymer or of a salt and prepolymer mixture which solution is substantially homogeneous, is in a single phase, is stable at the selected polycondensation temperature and atomizes readily, feeding said solution to a control means to give an aerosol mist in a flash reactor at a pressure of about 0―400 psig (0―2.76 MPa) to effect condensation and polymerization, the flash reactor being designed to provide a high heat flux with wall temperatures of about 400°F to about 1000°F (204―538°C) and melt temperatures of about 350°F to about 750°F (177―399°C) and keeping the resulting polymer in the reactor for about 0.1 seconds to about 20 seconds.

2. The process of Claim 1 wherein polyesters are manufactured from dicarboxylic acids and glycols.

3. The process of Claim 1 wherein polyarylates are manufactured from diphenols and dicarboxylic acids.

4. A process for the manufacture of polyamide, polyamide-imide and polyimide polymers which process comprises preparing a salt of an aliphatic or aromatic diamine or a mixture of these, and a di, tri or tetracarboxylic acid or a mixture of these or their corresponding anhydride by reacting both feedstocks at a temperature of about 375°F to about 450°F (191―232°C) in a solvent medium provided the solvent content of the resulting solution is below 25% solvent by weight, the resulting salt solution is subjected to a pressure of about 150―3000 psig (10.34―20.68 MPa) and is then passed through a preheat zone where the temperature is increased to about 625°F (329°C), the total residence time in the preheat zone is kept at about 25 to about 50 seconds, the resulting solution is then flashed through a control means to give an aerosol mist at a pressure of about 0―400 psig (0―2.76 MPa), the polymerization is further carried out in a flash reactor designed to provide a high heat flux with wall temperatures of about 600°F to about 1000°F (316―538°C) and melt temperatures of about 500°F to about 750°F (260―399°C), the total polymer residence time in the reactor is kept at about 0.1 to about 20 seconds.

5. A process for the manufacture of polyamides, polyamide-imides and polyimides which comprises polymerizing the amine salts of aliphatic or aromatic acids or anhydrides or mixture of these and aliphatic or aromatic diamines in an aqueous medium comprising less than 25 percent water, increasing the pressure of the salt to be fed to the preheat zone to about 1500 psig to about 3000 psig (10.34―20.68 MPa) passing the salt to the preheat zone where the temperature is elevated from about 550°F to about 625°F (288―329°C) and keeping the total residence time about 25 to about 50 seconds flashing the resulting prepolymer through a control means to give an aerosol mist at pressures of about 0―400 psig (0―2.76 MPa), then passing the polymer through a flash reactor to give the polymer a high heat flux wherein the melt temperature range is about 550°F to about 750°F (288―399°C) while the reactor wall temperature is about 600°F to about 1000°F (316―538°C) and keeping the polymer residence time in the flash reactor about 0.1 to about 20 seconds and recovering the polymer.

6. A process according to any of Claims 1, 4 and 5 wherein the reactants are hexamethylene diamine and terephthalic acid, isophthalic acid and adipic acid in a mole ratio of about 100:65:25:10 to about 100:85:5:10.

7. A process according to any of Claims 1, 4 and 5 wherein the reactants are hexamethylene diamine, terephthalic acid and isophthalic acid in the mole ratio of about 100:30:70 to about 100:90:10.

8. A process according to any of Claims 1, 4 and 5 wherein the reactants are hexamethylene diamine and adipic acid in a mole ratio of about 100:100.

9. A process according to any of Claims 1, 4 and 5, wherein the reactants are m-phenylene diamine, trimellitic anhydride and isophthalic acid in the mole ratio of about 100:10:90 to 100:50:50.

10. A process according to any preceding claim wherein the polymer is injected onto the screws of a twin screw reactor, the residence time in the extruder being about 45 seconds to about 7 minutes.

11. A process according to Claim 10 wherein the polymer is continuously injected onto the screws of a twin screw reactor, the residence time in the extruder being about 45 seconds to about 7 minutes.

12. A process according to any preceding claim operated continuously.

## Patentansprüche

1. Polykondensationsverfahren zur Herstellung von Polyamiden, Polyamidimiden, Polyestern und Polyarylaten, dadurch gekennzeichnet, daß zuerst eine erhitzte Lösung eines Salzes oder eines Präpolymers oder eines Gemisches aus einem Salz und einem Präpolymer gebildet wird, die praktisch homogen ist, eine einzelne Phase darstellt und bei der gewählten Polykondensationstemperatur stabil ist und leicht atomisiert, worauf diese Lösung unter Bildung eines Aerosolnebels in einen Verdampfungsreaktor, der bei einem Druck von etwa 0 bis 2,76 MPa (0 bis 400 psig) betrieben wird, zwecks Kondensation und Polymerisation eingespeist wird, wobei dieser Verdampfungsreaktor auf einem hohen Wärmestrom mit Wandtemperaturen von etwa 204 bis 538°C (400 bis 1000°F) und Schemlztemperaturen von etwa 177 bis 399°C (350 bis 750°F) ausgelegt ist, und wobei das erhaltene Polymer etwa 0,1 bis etwa 20 Sekunden im Reaktor gehalten wird.

2. Verfahren nach Anspruch 1, dadurch gekennzeichnet, daß Polyester aus Dicarbonsäuren und Glykolen hergestellt werden.

3. Verfahren nach Anspruch 1, dadurch gekennzeichnet, daß Polyarylate aus Diphenolen und Dicarbonsäuren hergestellt werden.

4. Verfahren zur Herstellung von Polyamiden, Polyamidimiden und Polyimiden, dadurch gekennzeichnet, daß zuerst ein Salz aus einem aliphatischen oder aromatischen Diamin oder einem Gemisch hiervon und aus einer Dicarbonsäure, Tricarbonsäure oder Tetracarbonsäure oder einem Gemisch hiervon oder aus den entsprechenden Säureanhydriden gebildet wird, indem beide Reaktionspartner bei einer Temperatur von etwa 191 bis 232°C (375 bis 450°F) in einem Lösungsmittelmedium mit der Maßgabe umgesetzt werden, daß der Lösungsmittelgehalt der gebildeten Lösung unter 25 Gewichtsprozent liegt, die erhaltene Salzlösung auf einen Druck von etwa 10,34 bis 20,68 MPa (1500 bis 3000 psig) gebracht und dann durch eine Vorheizzone geführt wird, in der die Temperatur auf etwa 329°C (625°F) erhöht wird, wobei die gesamte Verweilzeit in der Vorheizzone auf etwa 25 bis 50 Sekunden gehalten wird, die erhaltene Lösung hierauf durch ein Steuerorgan zu einem Aerosolnebel mit einem Druck von etwa 0 bis 2,76 MPa (0 bis 400 psig) verdampft wird und die Polymerisation in einem Verdampfungsreaktor weitergeführt wird, der so ausgelegt ist, daß sich ein hoher Wärmestrom mit Wandtemperaturen von etwa 316 bis 538°C (600 bis 1000°F) und Schmelztemperaturen von etwa 260 bis 399°C (500 bis 750°F) ergibt, wobei die gesamte Verweilzeit des Polymers im Reaktor auf etwa 0,1 bis 20 Sekunden gehalten wird.

5. Verfahren zur Herstellung von Polyamiden, Polyamidimiden und Polyimiden, dadurch gekennzeichnet, daß die Aminsalze von aliphatischen oder aromatischen Säuren oder Säureanhydriden oder Gemischen hiervon und von aliphatischen oder aromatischen Diaminen in einem wäßrigen Medium das weniger als 25 Gewichtsprozent Wasser enthält, polymerisiert werden, der Druck des in die Vorheizzone einzuspeisenden Salzes von etwa 10,34 MPa (1500 psig) auf etwa 20,68 MPa (3000 psig) erhöht wird, das Salz in die Vorheizzone eingespeist wird, in welcher die Temperatur von etwa 288°C (550°F) auf etwa 329°C (625°F) erhöht wird und die gesamte Verweilzeit auf etwa 25 bis 50 Sekunden gehalten wird, das gebildete Präpolymer durch Steuerorgane zu einem Aerosolnebel mit einem Druck von etwa 0 bis 2,76 MPa (0 bis 400 psig) verdampft wird und das Polymer dann durch einen Verdampfungsreaktor, der dem Polymer einen hohen Wärmefluß verleiht, geführt wird, in welchem der Schmelztemperaturbereich etwa 288 bis 399°C (550 bis 750°F) beträgt, wobei die Temperatur der Reaktorwand bei etwa 316 bis 538°C (600 bis 1000°F) liegt und wobei die Verweilzeit des Polymers im Verdampfungsreaktor auf etwa 0,1 bis 20 Sekunden gehalten wird, und das gebildete Polymer dann gewonnen wird.

6. Verfahren nach irgendeinem der Ansprüche 1, 4 und 5, dadurch gekennzeichnet, daß als Reaktanten Hexamethylendiamin und Terephthalsäure, Isophthalsäure und Adipinsäure in einem Molverhältnis von etwa 100:65:25:10 bis etwa 100:85:5:10 angewandt werden.

7. Verfahren nach irgendeinem der Ansprüche 1, 4 und 5, dadurch gekennzeichnet, daß als Reaktanten Hexamethylendiamin, Terephthalsäure und Isophthalsäure in einem Molverhältnis von etwa 100:30:70 bis etwa 100:90:10 angewandt werden.

8. Verfahren nach irgendeinem der Ansprüche 1, 4 und 5, dadurch gekennzeichnet, daß als Reaktanten Hexamethylendiamin und Adipinsäure in einem Molverhältnis von etwa 100:100 angewandt werden.

9. Verfahren nach irgendeinem der Ansprüche 1, 4 und 5, dadurch gekennzeichnet, daß als Reaktanten m-Phenylendiamin, Trimellitsäureanhydrid und Isophthalsäure in einem Molverhältnis von etwa 100:10:90 bis etwa 100:50:50 angewandt werden.

10. Verfahren nach irgendeinem der vorhergehenden Ansprüche, dadurch gekennzeichnet, daß das Polymer auf die Schnecken eines Doppelschneckenextruder gespritzt und unter einer Verweilzeit von etwa 45 Sekunden bis etwa 7 Minuten in diesem Extruder gehalten wird.

11. Verfahren nach Anspruch 10, dadurch gekennzeichnet, daß das Polymer kontinuierlich auf die Schnecken eines Doppelschneckenextruders gespritzt und unter einer Verweilzeit von etwa 45 Sekunden bis etwa 7 Minuten in diesem Extruder gehalten wird.

12. Verfahren nach irgendeinem der vorhergehenden Ansprüche, dadurch gekennzeichnet, daß es kontinuierlich durchgeführt wird.

## Revendications

1. Un procédé de polycondensation pour la fabrication de polyamides, de polyamide-imides, de polyesters et de polyarylates, lequel procédé comprend la formation d'une solution chauffée d'un sel ou d'un prépolymère ou d'un mélange de sel et de prépolymère, laquelle solution est essentiellement homogène, est un une phase unique, est stable à la température de polycondensation choisie et s'atomise facilement, l'introduction de ladite solution dans un dispositif de réglage pour former un brouillard d'aérosol dans un réacteur éclair à une pression d'environ 0―2,76 MPa (0―400 psig) pour effectuer la condensation et la polymérisation, le réacteur éclair étant conçu pour assurer un flux thermique élevé avec des températures de la paroi d'environ 204 à 538°C (400°―1 000°F) et des températures de la masse fondue d'environ 177 à 399°C (350°F―750°F) et le maintien du polymère obtenu dans le réacteur pendant environ 0,1 seconde à environ 20 secondes.

2. Le procédé de la revendication 1, dans lequel des polyesters sont fabriqués à partir d'acides carboxyliques et de gylcols.

3. Le procédé de la revendication 1, dans lequel des polyarylates sont fabriqués à partir de diphénols et d'acides dicarboxyliques.

4. Un procédé pour la fabrication de polymères de type polyamide, polyamide-imide et polyimide, lequel procédé comprend la préparation d'un sel d'une diamine aliphatique ou aromatique ou d'un de leurs mélanges et d'un acide di, tri ou tétracarboxylique ou d'un de leurs mélanges ou des anhydrides correspondants, par réaction des deux alimentations à une température d'environ 191 à 232°C (375°F―450°F) dans un milieu solvant, sous réserve que la teneur en solvant de la solution obtenue soit inférieure à 25% en poids de solvant, l'application à la solution de sel obtenue d'une pression d'environ 10,34 à 20,68 MPa (1 500―3 000 psig), puis son passage à travers une zone préchauffée où la température est portée à environ 329°C (625°F), la durée totale de séjour dans la zone de préchauffage est maintenue à environ 25 à environ 50 secondes, la solution obtenue est ensuite détendue à travers un dispositif de réglage pour former un brouillard d'aérosol à une pression d'environ 0 à 2,76 MPa (0―400 psig), la polymérisation est de plus effectuée dans un réacteur éclair conçu pour assurer un flux thermique élevé avec des températures de la paroi d'environ 316 à environ 538°C (600°F―1 000°F) et des températures de la masse fondue d'environ 260 à environ 399°C (500°F―750°F) et la durée totale du séjour du polymère dans le réacteur est maintenue à environ 0,1 à environ 20 secondes.

5. Procédé pour la fabrication de polyamides, de polyamideimides et de polyimides, comprenant la polymérisation des sels d'amine d'acides aliphatiques ou aromatiques ou d'anhydrides ou de mélanges de ceux-ci et de diamines aliphatiques ou aromatiques dans un milieu aqueux comprenant moins de 25% d'eau, l'élévation de la pression du sel dont on alimente la zone de préchauffage à environ 10,34 à environ 20,68 MPa (1 500―3 000 psig), le passage du sel dans la zone de préchauffage où la température est élevée d'environ 288 à environ 329°C (550°F à environ 625°F) et le maintien du temps total de séjour d'environ 25 à environ 50 secondes, la détente du prépolymère obtenu à travers un dispositif de réglage pour obtenir un brouillard d'aérosol à des pressions d'environ 0 à 2,76 MPa (0―400 psig), puis le passage du polymère à travers un réacteur éclair pour fournir un flux thermique élevé au polymère où la température de la masse fondue se situe dans la gamme d'environ 288 à environ 399°C (550°F―750°F), tandis que la température de la paroi du réacteur est d'environ 316 à environ 538°C (600°F―1 000°F), et le maintien du temps de séjour du polymère dans le réacteur éclair d'environ 0,1 à environ 20 secondes et la récupération du polymère.

6. Un procédé selon l'une quelconque des revendications 1, 4 et 5, dans lequel les composés réagissants sont l'hexaméthylènediamine et l'acide téréphtalique, l'acide isophtalique et l'acide adipique dans un rapport molaire d'environ 100/65/25/10 à environ 100/85/5/10.

7. Un procédé selon l'une quelconque des revendications 1, 4 et 5, dans lequel les composés réagissants sont l'hexaméthylènediamine, l'acide téréphtalique et l'acide isophtalique dans un rapport molaire d'environ 100/30/70 à environ 100/90/10.

8. Un procédé selon l'une quelconque des revendications 1, 4 et 5, dans lequel les composés réagissants sont l'hexaméthylènediamine et l'acide adipique dans un rapport molaire d'environ 100/100.

9. Un procédé selon l'une quelconque des revendications 1, 4 et 5, dans lequel les composés réagissants sont la m-phénylènediamine, l'anhydride trimellitique et l'acide isophtalique dans un rapport molaire d'environ 100/10/90 à 100/50/50.

10. Un procédé selon l'une quelconque des revendications précédentes, dans lequel on injecte le polymère sur les vis d'un réacteur à vis jumelées, le temps de séjour dans l'extrudeuse étant d'environ 45 secondes à environ 7 minutes.

11. Un procédé selon la revendication 10, dans lequel le polymère est injecté en continu sur les vis d'un réacteur à vis jumelées, le temps de séjour dans l'extrudeuse étant d'environ 45 secondes à environ 7 minutes.

12. Un procédé selon l'une quelconque des revendications précédentes réalisé en continu.
